Europäisches Patentamt

European Patent Office

Office européen des brevets

(19)

(11) Numéro de publication : **0 329 574 B1**

# FASCICULE DE BREVET EUROPEEN

(12)

(45) Date de publication du fascicule du brevet :
**02.01.92 Bulletin 92/01**

(51) Int. Cl.⁵ : **B66F 9/00,** B66C 19/00,
B65G 65/32

(21) Numéro de dépôt : **89420048.4**

(22) Date de dépôt : **15.02.89**

(54) Installation d'évacuation d'objets par chargement dans un conteneur.

(30) Priorité : **18.02.88 FR 8802265**

(43) Date de publication de la demande :
**23.08.89 Bulletin 89/34**

(45) Mention de la délivrance du brevet :
**02.01.92 Bulletin 92/01**

(84) Etats contractants désignés :
**AT BE CH DE ES FR GB GR IT LI LU NL SE**

(56) Documents cités :
**EP-A- 0 015 848
CH-A- 579 502
DE-A- 2 630 440
DE-A- 2 901 450
DE-A- 3 416 322
FR-A- 2 360 485
GB-A- 1 074 679
US-A- 1 382 614
US-A- 3 942 663**

(73) Titulaire : **AR SERVICE (S.A.R.L.)
68, Avenue Gabriel Péri
F-38400 Saint Martin d'Hères (FR)**

(72) Inventeur : **Pichot, Alain
98, Cours Jean Jaurès
F-38000 Grenoble (FR)**
Inventeur : **Rossi, Guy
La Monta St Jean de Vaulx
F-38220 Vizille (FR)**
Inventeur : **Talavera, Jean-Paul
Le Mont Revel
F-38420 Domène (FR)**

(74) Mandataire : **de Beaumont, Michel
1bis, rue Champollion
F-38000 Grenoble (FR)**

**Description**

La présente invention se rapporte à un dispositif destiné à effectuer le chargement d'un conteneur de grande dimension ouvert dans sa partie supérieure.

Le chargement d'un conteneur peut présenter certaines difficultés de manutention lorsque celui-ci est de grande dimension ou lorsque les éléments à charger sont lourds ou encombrants. Dans certains cas, la personne souhaitant charger le conteneur n'est pas expérimentée et ne dispose par d'appareil ou d'engin spécifique tel qu'une grue, une pelleteuse ou tout autre engin universel destiné à la manutention. Une telle situation se présente, par exemple, lorsque des conteneurs sont installés dans des lieux publics afin que la population puisse décharger les objets encombrants dont elle veut se débarrasser. La solution couramment adoptée consiste à aménager un quai dont le bord est à proximité de la partie supérieure du conteneur ouvert vers le haut, permettant ainsi à toute personne d'y jeter les objets dont elle veut se débarasser.

Un quai de chargement présente de nombreux inconvénients. L'aménagement d'un quai nécessite des travaux importants et coûteux. Par ailleurs, la place occupée par le conteneur, le quai et sa rampe d'accès est relativement importante, et l'installation est inamovible. Comme le quai ne vient affleurer qu'un bord latéral du conteneur, le chargement s'effectue toujours du même côté et le conteneur n'est pas rempli d'une façon uniforme. Bien souvent, des objets passent entre le conteneur et le bord du quai, et il est nécessaire de nettoyer les lieux fréquemment. Enfin, un quai est toujours un lieu dangereux pouvant entraîner des accidents d'automobile ou des chutes de personne, en particulier d'enfants.

Il est difficilement envisageable de mettre à la disposition du public des appareils connus pour la manutentation, par exemple des grues, chariots élévateur, etc. Toutes ces machines nécessitent en effet un apprentissage et toute fausse manoeuvre serait dangereuse pour les personnes ou pour les équipements.

De plus les installations connues destinées à la collecte publique de déchets ne répondent pas aux critères les plus élémentaires en matière de sécurité, de salubrité, de qualité architecturale et d'aménagement de l'environnement et sont donc très mal adaptées à une installation en zone urbaine.

La présente invention permet de remédier aux inconvénients précédemment cités.

L'invention concerne un dispositif de chargement d'un conteneur ouvert dans sa partie supérieure et posé sur un sol approximativement horizontal.

Selon une caractéristique de l'invention, le dispositif comporte un bac de faible capacité devant celle du conteneur et à fond escamotable, et des moyens d'actionnement du bac agissant de telle sorte que :

— le bac vient se positionner au niveau du sol à l'avant du conteneur, le fond étant fermé, afin de recevoir les objets à charger,

— le bac est élevé et amené horizontalement au dessus du conteneur, et

— le fond du bac est escamoté pour laisser tomber les objets dans le conteneur.

Selon une autre caractéristique de l'invention, les moyens d'actionnement comprennent : une poutre horizontale supportée à ses extrémités par deux poteaux verticaux fixés au sol, la poutre horizontale étant disposée latéralement par rapport au conteneur et à une hauteur supérieure à celle du conteneur, un premier chariot pouvant se déplacer le long de la poutre horizontale et auquel est reliée une poutre verticale s'étendant vers le bas jusqu'au voisinage du sol, un second chariot pouvant se déplacer le long de la poutre verticale, et auquel est fixé le bac, et des moyens d'actionnement du fond du bac, de déplacement du premier chariot et de déplacement du second chariot agissant pour assurer le déversement du contenu du bac dans le conteneur.

Selon une autre caractéristique de l'invention, l'extrémité inférieure de la poutre verticale est reliée à un élément de guidage de long d'un rail fixé au sol afin d'éviter un fléchissement de la poutre verticale sous l'action de la charge.

Selon une autre caractéristique de l'invention, le bac est constitué d'une structure rigide formant des parois latérales, d'un fond composé de parois dont des prolongements latéraux respectifs viennent s'articuler au niveau de deux parois latérales opposées de la structure rigide, et de moyens d'actionnement simultané des deux parois composant le fond afin de les faire pivoter en sens opposé entre une première position où elles sont bord à bord sous la structure rigide et une seconde position où elles sont écartées l'une de l'autre.

Selon une autre caractéristique de l'invention, le moyen de déplacement du premier chariot permet d'amener le bac au dessus du conteneur à un niveau prédéterminé variant, au cours des opérations successives de chargement, entre l'avant et l'arrière du conteneur, afin d'obtenir un chargement régulier.

Selon une autre caractéristique de l'invention, les moyens de déplacement du premier et du second chariot sont commandés de façon que, lorsque le dispositif est en attente d'utilisation, le bac soit positionné en hauteur et en avant du conteneur.

Selon une autre caractéristique de l'invention, les moyens d'actionnement du fond du bac, et de déplacement du premier et du second chariot utilisent chacun un moteur électrique.

Le dispositif de chargement conforme à l'invention peut s'installer très facilement sur un sol sensiblement horizontal, sans aménagement ou revêtement particulier, et occupe une surface au sol extrêmement limitée. Il est possible de l'installer ou de le retirer rapidement sans laisser de trace nuisible au niveau du sol. Il est utilisable très facilement par toute personne non expérimentée puisque son cycle de fonctionnement peut être automatisé. Le dispositif permet en outre l'emploi de conteneurs de très grandes dimensions qui sont en général plus économiques. On notera aussi que le dispositif de chargement conforme à l'invention rend difficile pour les usagers de retirer des objets présents dans le conteneur, offrant ainsi une plus grande sécurité.

D'autres caractéristiques et avantages de l'invention apparaîtront à la lecture de l'exemple de réalisation qui va suivre, illustré par les dessins annexés parmi lesquels :

la figure 1 représente en vue cavalière un dispositif de chargement conforme à l'invention ;

la figure 2 est une vue éclatée des principaux éléments constitutifs du dispositif représenté en figure 1 ; et

les figures 3A et 3B représentent un bac conforme à l'invention, respectivement en position fermée et ouverte.

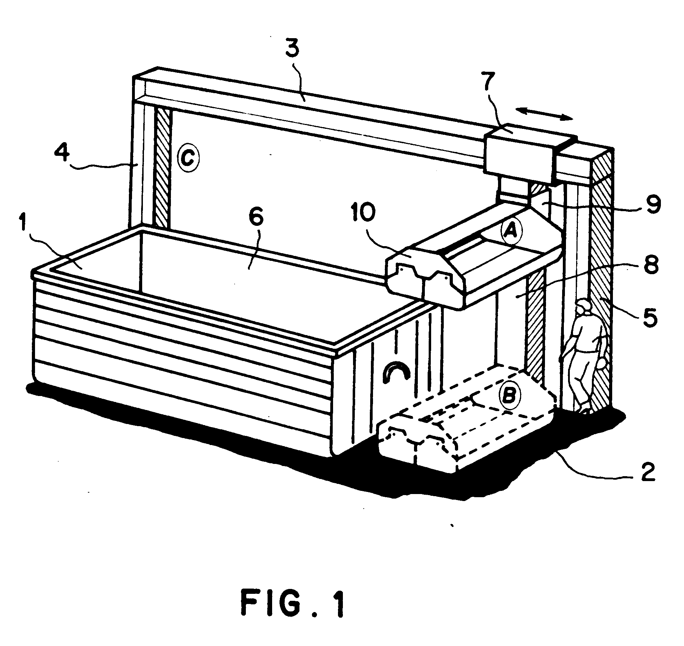

La figure 1 représente un dispositif de chargement conforme à l'invention auquel est adjoint un conteneur 1 posé sur un sol 2 sensiblement plat et horizontal. Ce conteneur a par exemple une capacité de 30 m³ et une hauteur de 2,20 m. Le dispositif de chargement comprend essentiellement une poutre horizontale 3 supportée à ses extrémités par deux poteaux verticaux 4, 5 encastrés et fixés au sol 2. La poutre horizontale 3 est nettement plus haute qui la partie supérieure du conteneur 1. Le conteneur 1 est disposé de façon que la poutre horizontale 3 soit sensiblement parallèle à la paroi latérale 6 du conteneur 1 et de façon que la projection au sol de la poutre horizontale 3 passe à l'extérieur du conteneur 1. Un premier chariot 7 est adapté à se déplacer le long de la poutre horizontale 3. Au dessous du premier chariot 7, est fixée une poutre verticale 8 s'étendant vers le bas jusqu'au voisinage du sol 2. Un second chariot 9 est monté sur la poutre verticale 8 de façon à se déplacer le long de celle-ci. Un bac 10 est fixé latéralement au second chariot 9, du côté du conteneur 1. Sur cette figure, on a représenté le bac 10 en position haute A et en position basse B (on a également indiqué une position C correspondant au bac en position haute à l'autre extrémité par rapport à la position A).

Lorsque le dispositif de chargement est en attente, le bac 10 est positionné en A ou en C. Lorsqu'un utilisateur souhaite charger des éléments dans le conteneur 1, il actionne une première manette et le bac 10 se positionne au niveau du sol en B, à l'avant du conteneur 1. L'utilisateur peut alors disposer les éléments dans le bac 10 dont la partie supérieure est ouverte. Le poids maximum de chargement du bac 10 est détecté par un système calibré, par exemple à 1800 kg. Ce système peut actionner un signal sonore prévenant ainsi l'utilisateur que la charge limite est atteinte. Une fois le bac chargé, l'utilisateur actionne une seconde manette qui commande la mise en route automatique du dispositif de chargement afin d'effectuer la dépose des éléments dans le conteneur 1. Ce cycle de fonctionnement comporte une première phase durant laquelle le bac 10 remonte en position haute A, une seconde phase durant laquelle le bac est déplacé, par le chariot 7, au dessus du conteneur 1, et une troisième phase durant laquelle le fond du bac 10 est escamoté de façon à libérer les éléments et les faire tomber dans le conteneur 1. Le bac 10 est ensuite ramené à la position d'attente A ou C.

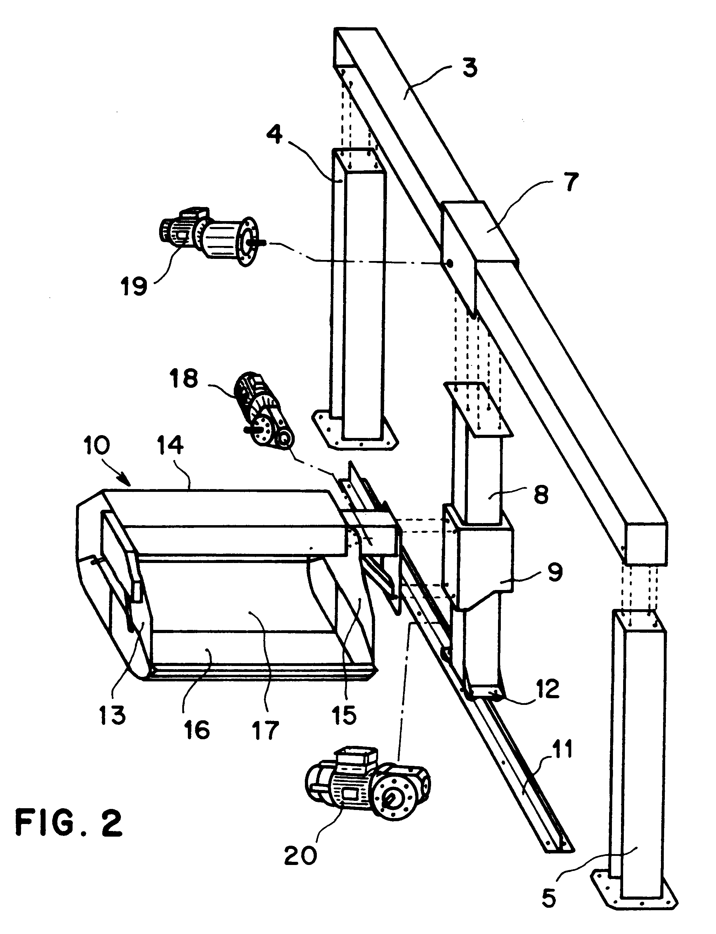

Sur la figure 2, on distingue mieux les éléments constitutifs essentiels du dispositif de chargement selon l'invention. On distingue la poutre horizontale 3 dont les extrémités sont montées sur les deux poteaux verticaux 4, 5. Le chariot 7 est muni de galets venant rouler sur une face horizontale de la poutre 3 de façon à supporter la charge durant le déplacement longitudinal. Le chariot 7 peut être en outre muni de galets venant rouler sur une surface verticale de la poutre 3 de façon à garantir un bon guidage latéral. La poutre verticale 3 est fixée à sa partie supérieure au dessous du chariot 7 et le second chariot 9 est monté coulissant sur la poutre verticale 8 par l'intermédiaire de galets, selon un montage semblable à celui du premier chariot 7. Un rail de guidage 11 est fixé sur le sol au dessous de la poutre horizontale 3 et est adapté à recevoir un élément de guidage 12 fixé rigidement au voisinage de l'extrémité inférieure de la poutre verticale 8. Ce guidage permet d'éviter le fléchissement de la poutre verticale 8 lorsque le bac est chargé. Sur le second chariot 9, est fixé latéralement le bac 10 qui est constitué d'une structure rigide formant des parois latérales 13, 14, 15 et d'un fond composé de deux parois 16, 17 qui peuvent se séparer de façon à libérer les éléments contenus dans le bac 10 lors de leur déchargement dans le conteneur 1.

Les mouvements d'écartement et de rapprochement des parois 16, 17, les mouvements de déplacement longitudinal du premier chariot 7 et du second chariot 9 sont provoqués, respectivement, par des moteurs électriques 18, 19, 20. Dans le cadre des exemples numériques indiqués précédemment, les moteurs électriques 18, 19 et 20 peuvent avoir des puissances respectives de 1470, 736 et 3675 W. Un système électrique (non représenté) permet d'actionner les trois moteurs 18, 19, 20, dans un sens ou dans l'autre, de façon à obtenir le cycle automatique de chargement. Un tel dispositif de commande automatique de cycle de fonctionnement ne présente par ici de caractéristique particulière et peut être réalisé par tout moyen connu.

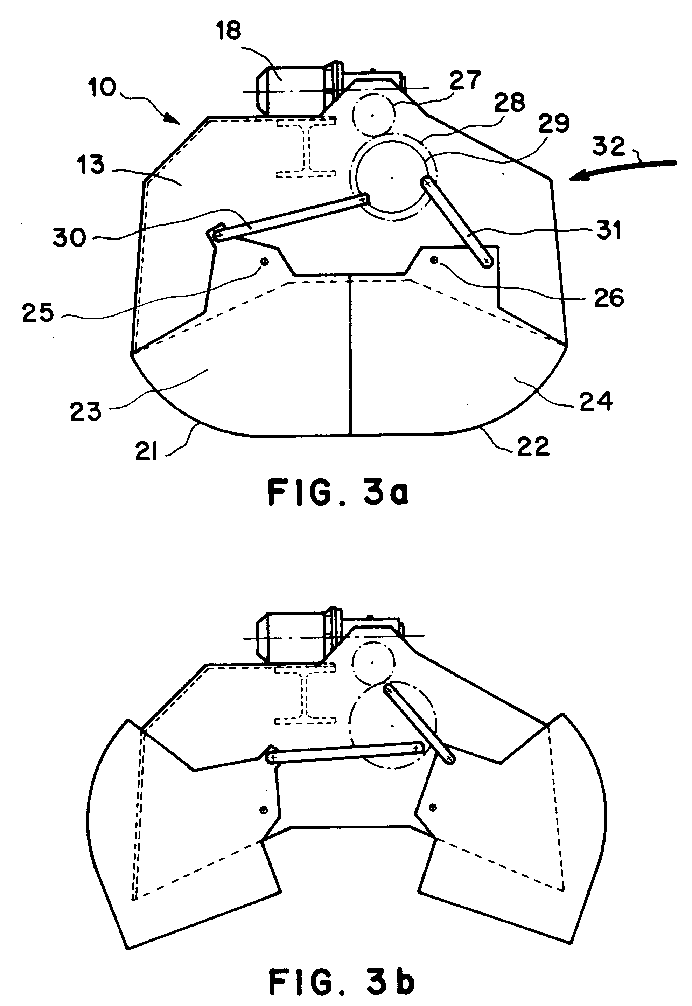

Un mode de réalisation du bac 10 est représenté plus en détail sur les figures 3A et 3B. Sur la figure 3A, le bac 10 est représenté avec son fond fermé. La figure 3B représente le même bac 10 dont le fond est escamoté de façon à pouvoir libérer vers le bas les éléments à charger dans le conteneur 1. On distingue essentiellement la paroi latérale 13 de la structure rigide du bac 10. Le fond du bac est constitué de deux parois 21, 22 dont des prolongements latéraux respectifs 23, 24 viennent s'articuler selon des axes 25, 26 au niveau des deux parois latérales 13, 15 opposées de la structure rigide du bac 10. Le moteur 18 permet l'entraînement d'un premier engrenage 27 acouplé à un second engrenage 28 lié en rotation à un plateau 29. Deux points du plateau 29 sont reliés à deux points respectifs des parois latérales 23, 24 par l'intermédiaire de bielles 30, 31. La mise en action du moteur 18 entraîne donc une rotation du plateau 29 qui provoque, par l'intermédiaire des bielles 30, 31, une rotation en sens inverse des parois de fond 21, 22. Ceci permet de commander la fermeture du fond, comme cela est représentée en figure 3A, ou son ouverture, comme cela est représenté en figure 3B. Lorsque le fond est fermé, l'utilisateur peut charger le bac 10 en amenant les éléments par devant à l'endroit indiqué par la flèche 32.

Le dispositif de chargement conforme à l'invention permet une manoeuvre facile et de haute sécurité. Le moyen d'actionnement du premier chariot 7 permet d'amener le bac 10 au dessus du conteneur 1 à des positions prédéterminées variant, au cours des opérations successives de chargement, entre l'avant et l'arrière du conteneur 1 afin d'obtenir un chargement régulier. Ceci permet de répartir la masse dans le conteneur et d'optimiser son remplissage. Il faut remarquer qu'il peut être dangereux de déplacer un conteneur dont la charge est inégalement répartie, par exemple d'un seul côté, ce qui risquerait de déséquilibrer le système de manutention du conteneur.

Selon une variante de l'invention, il est prévu d'utiliser le bac 10, pour compacter les déchets déjà déversés dans le conteneur en déplaçant ce bac de haut en bas le long de la poutre 8 avant de vider son contenu. Ce mouvement de compactage peut également être utilisé pour détecter si le conteneur est plein à l'emplacement où on tente de vider le bac. En ce cas on cherchera à compacter une autre région du conteneur.

On peut constater que, lorsque le bac 10 est en position d'attente A ou C, l'ensemble du dispositif de chargement conforme à l'invention est très dégagé du conteneur 1, permettant ainsi la libre circulation d'un camion d'enlèvement et de remplacement du conteneur.

Un avantage résultant du dispositif de chargement décrit ci-dessus est qu'il est de faible encombrement et donc bien adapté à être installé en zone urbaine. En outre, il sera facile d'enclore ce dispositif d'une enceinte pour constituer un ensemble architecturalement satisfaisant dans le cadre d'un plan d'urbanisme. Cette enceinte pourra venir au ras de deux cotés du conteneur et des poteaux supportant le système de chargement. Elle comportera de préférence une large porte du coté du bac pour permettre son chargement et la manutention du conteneur quand celui-ci doit être vidé et remplacé. Cette enceinte peut comprendre un toit pour améliorer son aspect esthétique.

On peut envisager qu'un tel dispositif soit, ou bien, directement accessible aux usagers, ou bien, confié à un préposé disposant, par exemple, de clefs pour l'ouverture de la porte de l'enceinte et l'actionnement du dispositif de chargement.

Bien entendu, la présente invention est susceptible de variantes qui apparaîtront à l'homme de l'art. Par exemple, comme moyen d'actionnement du bac et de déplacement des chariots, on pourra prévoir un système hydraulique ou pneumatique. Dans le cas d'un système hydraulique, on pourrait prévoir un groupe hydraulique lié à la poutre verticale mobile 8 et agissant par l'intermédiaire d'électrovannes ou bien sur un moteur hydraulique actionnant le chariot 7, ou bien un vérin vertical actionnant le chariot 9, ou bien des vérins agissant pour ouvrir et fermer le fond du bac 10.

## Revendications

1. Installation d'évacuation d'objets par chargement dans un conteneur (1) ouvert à sa partie supérieure et posé sur un sol (2) approximativement horizontal, caractérisée en ce qu'elle comporte :
un bac (10) de faible capacité devant celle du conteneur et à fond (16, 17) escamotable, et
des moyens d'actionnement du bac agissant de telle sorte que :
    * le bac (10) vient se positionner au niveau du sol à l'avant du conteneur (1), le fond (16, 17) étant fermé, afin de recevoir les objets à charger,
    * le bac (10) est élevé et amené horizontalement au dessus du conteneur (1), et
    * le fond (16, 17) du bac (10) est escamoté pour laisser tomber les objets dans le conteneur.

2. Installation de chargement d'un conteneur selon la revendication 1, caractérisée en ce que les moyens d'actionnement comprennent :
une poutre horizontale (3) supportée à ses extrémités par deux poteaux verticaux (4, 5) fixés au sol, la poutre horizontale (3) étant disposée latéralement par rapport au conteneur (1) et à une hauteur supérieure à celle du conteneur (1),
un premier chariot (7) pouvant se déplacer le long de la poutre horizontale (3) et auquel est reliée une poutre verticale (8) s'étendant vers le bas jusqu'au voisinage du sol (2),
un second chariot (9) pouvant se déplacer le long de la poutre verticale (8), et auquel est fixé le bac (10), et
des moyens d'actionnement du fond du bac (10), de déplacement du premier chariot (7) et de déplacement du second chariot (9) agissant pour assurer le déversement du contenu du bac dans le conteneur.

3. Installation de chargement d'un conteneur selon la revendication 1 ou 2, caractérisée en ce que l'extrémité inférieure de la poutre verticale (8) est reliée à un élément de guidage (12) le long d'un rail (11) fixé au sol (2) parallèlement à la poutre horizontale (3), afin d'éviter un fléchissement de la poutre verticale (8) sous l'action de la charge.

4. Installation de chargement d'un conteneur selon l'une quelconque des revendications 1 à 3, caractérisée en ce que le bac (10) est constitué d'une structure rigide (13, 14, 15) formant des parois latérales, d'un fond (16, 17) composé de deux parois (21, 22) dont des prolongements latéraux (23, 24) respectifs viennent s'articuler au niveau de deux parois latérales (13, 15) opposées de la structure rigide (13, 14, 15), et de moyens d'actionnement simultané (18, 27, 28, 29, 30, 31) des deux parois (21, 22) composant le fond afin de les faire pivoter en sens opposé entre une première position où elles sont bord à bord et une seconde position où elles sont écartées l'une de l'autre.

5. Installation de chargement d'un conteneur selon l'une quelconque des revendications 1 à 4, caractérisée en ce que le moyen de déplacement du premier chariot (7) permet d'amener le bac au-dessus du conteneur (1) à un niveau prédéterminé variant, au cours des opérations successives de chargement, entre l'avant et l'arrière du conteneur (1), afin d'obtenir un chargement régulier.

6. Installation de chargement d'un conteneur selon l'une quelquonque des revendications 1 à 5, caractérisée en ce que les moyens de déplacement du premier (7) et du second (9) chariot sont commandés de façon que, lorsque le dispositif est en attente d'utilisation, le bac (10) soit positionné en hauteur (A) et en avant du conteneur (1).

7. Installation de chargement d'un conteneur selon l'une quelconques des revendications 1 à 6, caractérisée en ce que les moyens d'actionnement du fond du bac (16, 17), et de déplacement du premier (7) et du second (9) chariot utilisent chacun un moteur électrique (18, 19, 20).

8. Installation de chargement d'un conteneur selon l'une quelconque des revendications 1 à 6, caractérisée en ce que les moyens d'actionnement du fond du bac (16, 17), et de déplacement du premier (7) et du second (9) chariot utilisent un groupe hydraulique commandant par des électrovannes chacun de ces moyens.

9. Installation de chargement d'un conteneur selon l'une quelconque des revendications 1 à 8, caractérisée en ce que les moyens d'actionnement du second chariot comportent des moyens de déplacement de bas en haut pour compacter le contenu du conteneur sous l'effet du fond du bac.

**Patentansprüche**

1. Anlage zum Beseitigen von Gegenständen durch Einfüllen in einen Behälter (1), der auf seiner Oberseite offen und auf einem annähernd horizontalen Boden (2) abgestellt ist, dadurch gekennzeichnet, daß die Anlage enthält :
eine Box (10) geringer Kapazität im Vergleich zu derjenigen des Behälters mit einem klappbaren Boden (16, 17) und Betätigungsmittel für die Box, die derart wirken, daß :
  * die Box (10) auf Boden-Niveau vor dem Container (1) positioniert wird, wobei der Boden (16, 17) geschlossen ist, um die einzuladenden Gegenstände aufzunehmen,
  * die Box (10) angehoben und oberhalb des Behälters (1) horizontal geführt wird, und
  * der Boden (16, 17) der Box (10) geklappt wird, um die Gegenstände in den Behälter fallenzulassen.

2. Anlage zum Beladen eines Behälters nach Anspruch 1, dadurch gekennzeichnet, daß die Betätigungsmittel umfassen :
einen horizontalen Balken (3), der an seinen äußeren Enden durch zwei am Boden befestigte vertikale Pfosten (4, 5) gestützt ist, wobei der horizontale Balken (3) in bezug zu dem Behälter (1) seitlich und auf einer Höhe, die größer ist als jene des Behälters (1), angeordnet ist,
einen ersten Schlitten (7), der entlang des horizontalen Balkens (3) bewegt werden kann und mit dem ein vertikaler Balken (8) verbunden ist, der sich nach unten bis in die Nähe des Bodens (2) erstreckt,
einen zweiten Schlitten (9), der entlang des vertikalen Balkens (8) bewegt werden kann und an dem die Box (10) befestigt ist, und
Betätigungsmittel für den Boden der Box (10), zum Verschieben des ersten Wagens (7) und zum Verschieben des zweiten Wagens (9), die die Entleerung des Inhaltes der Box in den Behälter sicherstellen.

3. Anlage zum Beladen eines Behälters nach Anspruch 1 oder 2, dadurch gekennzeichnet, daß die untere Seite des vertikalen Balkens (8) mit einem Führungselement (12) zum Führen entlang einer am Boden (2) parallel zum horizontalen Balken (3) befestigten Schiene (11) verbunden ist, um eine Biegung des vertikalen Balkens (8) während der Ladetätigkeit zu vermeiden.

4. Anlage zum Beladen eines Behälters nach einem der Ansprüche 1 bis 3, dadurch gekennzeichnet, daß die Box (10) aus einer festen Struktur (13, 14, 15) gebildet ist, die aus Seitenwänden, einem Boden (16) aus zwei Wänden (21, 22), deren seitliche Verlängerungen (23, 24) auf der Höhe der beiden Seitenwände (13, 14) auf entgegengesetzten Seiten der festen Struktur (13, 14, 15) verschwenkt werden, und aus einer Einrichtung (18, 27, 28, 29, 30, 31) zum gleichzeitigen Betätigen der beiden, den Boden bildenden Wänden (21, 22) geformt ist, um diese in entgegengesetzter Richtung zwischen einer ersten Position, wo sie direkt aneinander anliegen, und einer zweiten Position, wo sie voneinander entfernt sind, zu verschwenken.

5. Anlage zum Beladen eines Behälters nach einem der Ansprüche 1 bis 4, dadurch gekennzeichnet, daß die Einrichtung zum Verschieben des ersten Schlittens (7) es erlaubt, die Box oberhalb des Behälters (1) auf einem vorbestimmten variierenden Niveau im Verlaufe der aufeinanderfolgenden Ladeoperationen zwischen der Front und der Hinterseite des Behälters (1) zu führen, um eine regelmäßige Beladung zu erhalten.

6. Anlage zum Beladen eines Behälters nach einem der Ansprüche 1 bis 5, dadurch gekennzeichnet, daß die Einrichtungen zum Verschieben des ersten und des zweiten Schlittens (7, 9) derart gesteuert werden, daß während der Wartestellung der Einrichtung die Box (10) in der Höhe (A) und vor dem Behälter (1) gehalten ist.

7. Anlage zum Beladen eines Behälters nach einem der Ansprüche 1 bis 6, dadurch gekennzeichnet, daß die Betätigungsmittel für den Boden (16, 17) der Box und die Einrichtungen zum Verschieben des ersten und des zweiten Schlittens (7, 9) jeweils einen Elektromotor (18, 19, 20) verwenden.

8. Anlage zum Beladen eines Behälters nach einem der Ansprüche 1 bis 6, dadurch gekennzeichnet, daß die Betätigungsmittel für den Boden (16, 17) der Box und die Einrichtungen zum Verschieben des ersten und des zweiten Schlittens (7, 9) eine Hydraulikanlage benutzen, wobei diese die Einrichtungen über Elektroventile steuern.

9. Anlage zum Beladen eines Behälters nach einem der Ansprüche 1 bis 8, dadurch gekennzeichnet, daß die Betätigungseinrichtung für den zweiten Schlitten eine Einrichtung zum Verschieben von unten nach oben aufweist, um den Inhalt des Behälters unter der Wirkung des Bodens der Box zu verfestigen.

**Claims**

1. An installation for the evacuation of objects by loading into a container (1) having an open top and lying on an approximately horizontal ground (2), characterized in that it comprises :
a box (10) of small capacity with respect to that of the container and having a removable bottom (16, 17), and
box operating means acting such that :
    * the box (10) is positioned at ground level in front of the container (1), the bottom (16, 17) being closed, in order to receive objects to be loaded,
    * the box (10) is elevated and brought horizontally above the container (1), and

    * the bottom (16, 17) of the box (10) is removed in order to let the objects fall in the container.

2. An installation for loading a container according to claim 1, characterized in that the operating means comprise :
a horizontal beam (3) supported at its ends by two vertical posts (4, 5) fixed to the ground, the horizontal beam (3) being disposed laterally to the container (1) and at a greater height than that of the container (1),
a first carriage (7) movable along the beam (3) and to which a vertical post (8) is connected extending downwards and arriving proximate to the ground (2),
a second carriage (9) movable along the vertical post (8), and to which the box (10) is fixed, and
means for operating the bottom of the box (10), for moving the first carriage (7) and for moving the second carriage (9) acting to ensure the emptying of the contents of the box into the container.

3. An installation for loading a container according to claim 1 or 2, characterized in that the bottom end of the vertical post (8) is connected to an element (12) for guidance along a rail (11) fixed to the ground (2) parallel to the horizontal post (3), in order to avoid a bending of the vertical post (8) under the load.

4. An installation for loading a container according to any of the claims 1 to 3, characterized in that the box (10) is comprised of a rigid structure (13, 14, 15) forming lateral walls, of a bottom (16, 17) composed of two walls (21, 22) the respective lateral extensions (23, 24) of which are articulated to the two opposed lateral walls (13, 15) of the rigid structure (13, 14, 15), and of simultaneous operating means (18, 27, 28, 29, 30, 31) of the two walls (21, 22) composing the bottom in order to make them rotate in opposite directions between a first position where they are edge to edge and a second position where they are drawn aside.

5. An installation for loading a container according to any of the claims 1 to 4, characterized in that the moving means of the first carriage (7) enable the box to be brought above the container (1) at a predetermined level varying, during the successive loading operations, between the front and the rear of the container (1), in order to obtain a regular loading.

6. An installation for loading a container according to any of the claims 1 to 5, characterized in that the moving means of the first (7) and second (9) carriage are controlled such that, when the device is awaiting use, box (10) is positioned at height (A) and in front of the container (1).

7. An installation for loading a container according to any of the claims 1 to 6, characterized in that the means for operating the bottom of the box (16, 17), and for moving the first (7) and second (9) carriage each use an electric motor (18, 19, 20).

8. An installation for loading a container according to any of the claims 1 to 6, characterized in that the means for operating the bottom of the box (16, 17), and for moving the first (7) and second (9) carriage use a hydraulic unit controlling each of these means by electric valves.

9. An installation for loading a container according to any of the claims 1 to 8, characterized in that the means for operating the second carriage comprise up and down movement means for packing the content of the container under the effect of the bottom of the box.

FIG . 1

FIG. 2

FIG. 3a

FIG. 3b